# FASCICULE DE BREVET EUROPEEN

(11) **EP 4 251 484 B1**
(45) Date de publication et mention de la délivrance du brevet: **02.09.2026**
(21) Numéro de dépôt: 21814758.5
(22) Date de dépôt: 15.11.2021
(51) Int. Cl.: B60W 30/09, B60W 50/10, B60W 50/08, B60W 30/045, B60W 50/00

(54) **PROCÉDÉ DE PILOTAGE AUTOMATISÉ D'UN VÉHICULE AUTOMOBILE**
VERFAHREN ZUM AUTOMATISIERTEN LENKEN EINES KRAFTFAHRZEUGS
METHOD FOR AUTOMATED STEERING OF A MOTOR VEHICLE

(30) Priorité: 24.11.2020 FR 2012064
(43) Date de publication de la demande: 04.10.2023
(73) Titulaire: Ampere SAS, 92100 Boulogne-Billancourt (FR); NISSAN MOTOR CO., LTD., Kanagawa 221-0023 (JP)
(72) Inventeur: DO, Anh-Lam, 92160 ANTONY (FR)
(74) Mandataire: Renault Group
(86) Numéro de dépôt international: PCT/EP2021/081746
(87) Numéro de publication internationale: WO 2022/112047

(56) Documents cités:
- EP-A1- 3 608 190
- CN-A- 111 959 500
- FR-A1- 3 088 275
- US-A- 5 302 010

## Description

### DOMAINE TECHNIQUE DE L'INVENTION

La présente invention concerne de manière générale l'automatisation du suivi de trajectoires de véhicules automobiles.

Elle trouve une application particulièrement avantageuse dans le cadre des aides à la conduite de véhicules automobiles.

Elle concerne plus particulièrement un procédé de pilotage automatisé d'un véhicule automobile permettant à ce véhicule de suivre une trajectoire d'évitement d'obstacle.

Elle concerne aussi un véhicule automobile équipé d'un calculateur adapté à mettre en œuvre ce procédé.

### ETAT DE LA TECHNIQUE

Dans un souci de sécurisation des véhicules automobiles, on équipe actuellement ces derniers de systèmes d'aide à la conduite ou de systèmes de conduite autonome.

Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule. Ces systèmes sont conçus pour détecter un obstacle sur la voie et pour agir, dans cette situation, sur le système de freinage conventionnel du véhicule automobile.

Il existe toutefois des situations dans lesquelles ces systèmes de freinage d'urgence ne permettent pas d'éviter la collision ou ne sont pas utilisables (par exemple si un autre véhicule suit de trop près le véhicule automobile).

Pour ces situations, il a été développé des systèmes d'évitement automatique (plus connu sous l'abréviation AES, de l'anglais « Automatic Evasive Steering » ou « Automatic Emergency Steering ») qui permettent d'éviter l'obstacle en déviant le véhicule de sa trajectoire, en agissant soit sur la direction du véhicule, soit sur le système de freinage différentiel du véhicule.

On connaît ainsi du document WO2020099098 un procédé d'évitement d'obstacle dans lequel les systèmes de braquage et de freinage différentiel sont commandés en combinaison pour maîtriser la trajectoire d'évitement. Le système de braquage est utilisé pour assurer une bonne stabilité à des vitesses moyennes alors que le système de freinage est utilisé à des vitesses élevées. Le document CN111959500 A divulgue un système comparable.

Il arrive toutefois que ce système AES impose au véhicule une trajectoire limite en termes de contrôlabilité, qui ne permet pas au conducteur de reprendre la main sur la conduite du véhicule en toute maîtrise.

### PRESENTATION DE L'INVENTION

Afin de remédier à l'inconvénient précité de l'état de la technique, la présente invention propose d'utiliser un contrôleur mixte qui agit tant sur le braquage des roues directrices que sur le freinage différentiel des roues de droite et de gauche du véhicule, et qui est adapté à élaborer une consigne de pilotage qui limite l'amplitude et/ou la vitesse du changement de direction imposé au véhicule automobile.

Plus particulièrement, on propose selon l'invention un procédé de pilotage automatisé d'un véhicule automobile, comportant des étapes de :
- acquisition de paramètres relatifs à une trajectoire d'évitement d'un obstacle par le véhicule automobile, et de
- calcul par un calculateur d'une première consigne de pilotage d'un actionneur de braquage des roues directrices et d'une seconde consigne de pilotage d'au moins un actionneur de freinage différentiel des roues, en fonction desdits paramètres, dans lequel la première consigne de pilotage et la seconde consigne de pilotage sont chacune déterminées au moyen d'un contrôleur qui satisfait un modèle limiteur d'amplitude et/ou de variation de consigne.

Ainsi, grâce à l'invention, il est possible d'utiliser une loi de contrôle mixte agissant sur le braquage et sur le freinage différentiel de façon à ce que le véhicule suivre une trajectoire d'évitement d'obstacle. Cette loi de contrôle est optimisée pour assurer un contrôle du véhicule qui soit performant (c'est-à-dire suffisamment rapide pour assurer l'évitement d'obstacle), ainsi que stable et robuste.

Pour cela, l'invention propose d'appliquer des contraintes en termes d'amplitude et de vitesse (c'est-à-dire de variation de consigne). Elle propose préférentiellement en outre d'inhiber, lorsque cela s'avère nécessaire, le calcul des consignes de pilotage, c'est-à-dire d'arrêter le contrôle des freins ou du braquage lorsque les conditions le requièrent. Cet arrêt peut être temporaire ou définitif, jusqu'à une nouvelle activation du système AES.

Selon l'invention:
- la première consigne de pilotage et/ou la seconde consigne de pilotage est déterminée au moyen d'un contrôleur qui satisfait un modèle limiteur d'amplitude et de variation de consigne ;
- la première consigne de pilotage et la seconde consigne de pilotage sont déterminées en fonction d'un coefficient fixant la contribution de chaque actionneur (dans le pilotage de la direction du véhicule), ledit coefficient étant calculé en fonction d'une vitesse de lacet du véhicule automobile et d'un couple appliqué par le conducteur sur le volant du véhicule automobile ;
- ledit coefficient étant calculé en fonction également d'un paramètre dont la valeur varie selon que la première consigne de pilotage est saturée ou non (c'est-à-dire selon qu'elle est limitée ou non par le contrôleur) D'autres caractéristiques avantageuses et non limitatives du procédé conforme à l'invention, prises individuellement ou selon toutes les combinaisons techniquement possibles, sont les suivantes:
   - le coefficient est calculé de façon à ce que la seconde consigne de pilotage soit nulle si la valeur absolue d'un couple appliqué par un conducteur sur un volant du véhicule automobile dépasse un seuil prédéterminé ;
   - le coefficient est calculé de façon à ce que seul l'actionneur de braquage des roues directrices est utilisé lorsque la vitesse de lacet du véhicule est supérieur à un seuil de contrôle et/ou lorsque la première consigne de pilotage permet de stabiliser le véhicule automobile à elle seule ;
   - le coefficient est calculé de façon à ce que l'actionneur de braquage des roues directrices et l'actionneur de freinage différentiel des roues soient utilisés en combinaison sinon ;
   - le coefficient est calculé de façon à varier de façon continue en fonction du temps ;
   - il est prévu d'interrompre (de préférence définitivement) la détermination de la première consigne de pilotage lorsque la valeur absolue d'un couple appliqué par un conducteur sur un volant du véhicule automobile dépasse un seuil prédéterminé ;
   - il est prévu d'interrompre (temporairement ou définitivement) la détermination de la seconde consigne de pilotage lorsque la valeur absolue d'un couple appliqué par un conducteur sur un volant du véhicule automobile dépasse un autre seuil prédéterminé ;
   - le contrôleur qui permet de déterminer la seconde consigne de pilotage satisfait un modèle limiteur d'amplitude, de telle sorte que la seconde consigne de pilotage reste inférieure ou égale à une limite ;
   - ladite limite est déterminée en fonction de la vitesse du véhicule et de la vitesse de lacet du véhicule automobile ;
   - pour calculer la première consigne de pilotage, il est prévu de déterminer une première consigne non saturée et d'en déduire la première consigne au moyen d'un pseudo-contrôleur en boucle fermée ayant une fonction de transfert en chaîne directe qui comprend une fonction type tangente hyperbolique de l'écart entre la première consigne non saturée et la première consigne ;
   - pour calculer la seconde consigne, il est prévu de déterminer une seconde consigne non saturée et d'en déduire une seconde consigne semi-saturée au moyen d'un pseudo-contrôleur en boucle fermée ayant une fonction de transfert en chaîne directe qui comprend une fonction type tangente hyperbolique de l'écart entre la seconde consigne non saturée et la seconde consigne semi-saturée, puis d'utiliser un autre pseudo-contrôleur en boucle fermée qui fournit en sortie la seconde consigne et dont la fonction de transfert en chaîne directe comprend une fonction type tangente hyperbolique de l'écart entre la seconde consigne semi-saturée et ladite seconde consigne.

Est également décrite, mais non revendiquée, une méthode d'élaboration de contrôleurs en vue de leur utilisation dans un procédé de pilotage tel que précité, dans lequel il est prévu de :
- acquérir un modèle matriciel comportemental de l'appareil,
- déterminer une partie au moins des coefficients des matrices du modèle matriciel comportemental,
- en déduire deux contrôleurs qui satisfont chacun le suivi de la trajectoire à emprunter, un modèle limiteur d'amplitude de consigne de pilotage et/ou un modèle limiteur de variation de consigne de pilotage.

L'invention propose également un Véhicule automobile comprenant un actionneur de braquage des roues directrices, un actionneur de freinage différentiel des roues, et un calculateur pour piloter lesdits actionneurs, qui est programmé pour mettre en œuvre un procédé tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique de dessus d'un véhicule automobile circulant sur une route, sur laquelle la trajectoire que ce véhicule doit emprunter est représentée ;
[Fig. 2] est une vue schématique en perspective du véhicule automobile de la figure 1, représenté dans quatre positions successives situées le long d'une trajectoire d'évitement d'un obstacle ;
[Fig. 3] est un schéma illustrant une fonction de transfert en boucle fermée utilisée pour mettre en œuvre une fonction de saturation du braquage des roues du véhicule ;
[Fig. 4] est un schéma illustrant des fonctions de transfert en boucle fermée utilisées pour mettre en œuvre des fonctions de saturation du freinage différentiel des roues du véhicule ;
[Fig. 5] est un diagramme illustrant des étapes d'une opération de détermination de valeurs utilisables dans un processus de pilotage d'un véhicule automobile conforme à l'invention ;
[Fig. 6] est un graphique illustrant les différentes fonctions de saturation et d'inhibition utilisables dans le cadre de ce processus de pilotage du véhicule automobile.

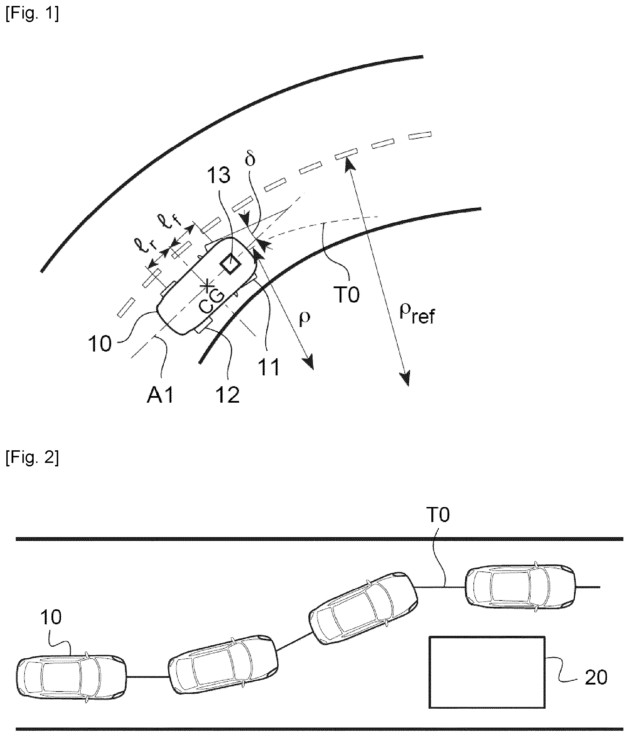

Sur la figure 1, on a représenté un véhicule automobile 10 comprenant classiquement un châssis qui délimite un habitacle, deux roues avant 11 directrices, et deux roues arrière 12 non directrices. En variante, ces deux roues arrière pourraient également être directrices, ce qui nécessiterait toutefois une adaptation de la loi de commande décrite ci-après.

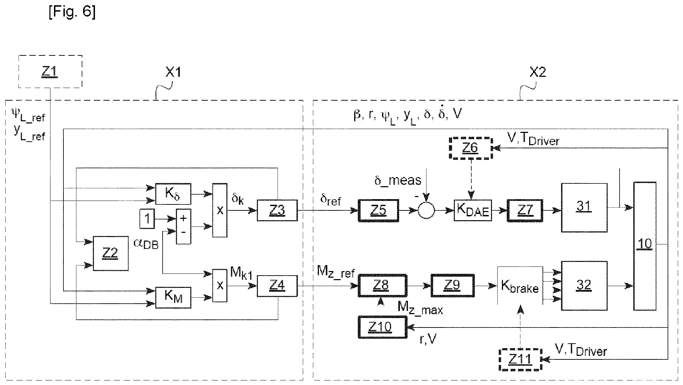

Ce véhicule automobile 10 comporte un système de direction conventionnel permettant d'agir sur l'orientation des roues avant 11 de façon à pouvoir faire tourner le véhicule. Ce système de direction conventionnel comprend notamment un volant connecté à des biellettes afin de faire pivoter les roues avant 11. Dans l'exemple considéré, il comporte également un actionneur 31 (représenté sur la figure 6) permettant d'agir sur l'orientation des roues avant en fonction de l'orientation du volant et/ou en fonction d'une requête reçue d'un calculateur 13.

En complément, ce véhicule automobile comporte un système de freinage différentiel permettant d'agir différemment sur les roues avant 11 (et sur les roues arrière 12) de façon à ralentir le véhicule automobile en le faisant tourner. Ce système de freinage différentiel comprend par exemple un différentiel piloté ou des moteurs électriques placés au niveau des roues du véhicule ou encore des étriers de freinage pilotés indépendamment les uns des autres. Il comporte ainsi au moins un actionneur 32 (représenté sur la figure 6), qui est conçu pour agir différemment sur les vitesses de rotation des roues en fonction d'une requête reçue d'un calculateur 13. On considérera ici qu'il comporte plusieurs actionneurs 32.

Le calculateur 13 est alors prévu pour piloter l'actionneur 31 de direction assistée et les actionneurs 32 du système de freinage différentiel en fonction des conditions de circulation rencontrées. Il comporte à cet effet au moins un processeur, au moins une mémoire et une interface d'entrée et de sortie.

Grâce à son interface, le calculateur 13 est adapté à recevoir des signaux d'entrée provenant de différents capteurs.

Parmi ces capteurs, il est par exemple prévu :
- un dispositif tel qu'une caméra frontale, permettant de repérer la position du véhicule par rapport à sa voie de circulation,
- un dispositif tel qu'un télédétecteur RADAR ou LIDAR, permettant de détecter un obstacle 20 se trouvant sur la trajectoire du véhicule automobile 10 (figure 2),
- au moins un dispositif de détection latéral, tel qu'un télédétecteur RADAR ou LIDAR, permettant d'observer l'environnement sur les côtés du véhicule,
- un dispositif tel qu'un gyromètre, permettant de déterminer la vitesse de rotation en lacet (autour d'un axe vertical) du véhicule automobile 10,
- un capteur de position et de vitesse angulaire du volant, et
- un capteur de couple appliqué par le conducteur sur le volant.

Grâce à son interface, le calculateur 13 est adapté à transmettre une consigne à l'actionneur 31 de direction assistée et une autre consigne aux actionneurs 32 du système de freinage différentiel.

Il permet ainsi de forcer le véhicule à suivre une trajectoire d'évitement T0 de l'obstacle 20 (voir figure 2).

Grâce à sa mémoire, le calculateur 13 mémorise des données utilisées dans le cadre du procédé décrit ci-dessous.

Il mémorise notamment une application informatique, constituée de programmes d'ordinateur comprenant des instructions dont l'exécution par le processeur permet la mise en œuvre par le calculateur du procédé décrit ci-après.

Avant de décrire ce procédé, on peut introduire les différentes variables qui seront utilisées, dont certaines sont illustrées sur la figure 1.

La masse totale du véhicule automobile sera notée « m » et sera exprimée en kg.

L'inertie du véhicule automobile autour d'un axe vertical passant par son centre de gravité CG sera notée « J » ou « I_{z} » et sera exprimée en N.m.

La distance entre le centre de gravité CG et l'essieu avant du véhicule sera notée « I_{f} » et sera exprimée en mètres.

La distance entre le centre de gravité CG et l'essieu arrière sera notée « Iᵣ » et sera exprimée en mètres.

Le coefficient de rigidité de dérive des roues avant sera noté « C_{f} » et sera exprimé en N/rad.

Le coefficient de rigidité de dérive des roues arrière sera noté « Cᵣ » et sera exprimé en N/rad.

Ces coefficients de rigidité de dérive des roues sont des notions bien connues de l'homme du métier. A titre d'exemple, le coefficient de rigidité de dérive des roues avant est ainsi celui qui permet d'écrire l'équation Fᵣ = 2.C_{f}.α_{f}, avec F_{f} la force latérale de glissement des roues avant et α_{f} l'angle de dérive des roues avant.

L'angle de braquage que font les roues avant directrices avec l'axe longitudinal A1du véhicule automobile 10 sera noté « δ » et sera exprimé en rad.

La variable δ_{ref}, exprimée en rad, désignera la consigne saturée d'angle de braquage, telle qu'elle sera transmise à l'actionneur de direction assistée.

La variable δ_{K}, exprimée en rad, désignera la consigne non saturée d'angle de braquage. A ce stade, on pourra seulement préciser que le concept de saturation sera lié à des limites de valeur ou de variation de valeur.

La vitesse de lacet du véhicule (autour de l'axe vertical passant par son centre de gravité CG) sera notée « r » et sera exprimée en rad/s.

L'angle relatif de cap entre l'axe longitudinal A1 du véhicule et la tangente à la trajectoire d'évitement T0 (trajectoire souhaitée du véhicule) sera noté « Ψ_{L} » et sera exprimé en rad.

L'écart latéral entre l'axe longitudinal A1 du véhicule automobile 10 (passant par le centre de gravité CG) et la trajectoire d'évitement T0, à une distance de visée « Is » située à l'avant du véhicule, sera noté « y_{L} » et sera exprimé en mètres.

La consigne d'écart latéral entre l'axe longitudinal A1 du véhicule automobile 10 (passant par le centre de gravité CG) et la trajectoire d'évitement T0, à une distance de visée « Is » située à l'avant du véhicule, sera notée « y_{L-ref} » et sera exprimée en mètres.

L'erreur de suivi de trajectoire sera notée « e_{yL} » et sera exprimée en mètres. Elle sera égale à la différence entre la consigne d'écart latéral y_{L-ref} et l'écart latéral y_{L}.

La distance de visée « Is » précitée sera mesurée à partir du centre de gravité CG et s'exprimera en mètres.

L'angle de dérive du véhicule automobile 10 (angle que fait le vecteur vitesse du véhicule automobile avec son axe longitudinal A1) sera noté « β » et sera exprimé en rad.

La vitesse du véhicule automobile selon l'axe longitudinal A1 sera notée « V » et s'exprimera en m/s.

La constante « g » sera l'accélération de la pesanteur, exprimée en m.s⁻².

La courbure moyenne de la route au niveau du véhicule automobile sera noté ρ_{ref} et s'exprimera en m⁻¹.

La consigne de moment de lacet à appliquer grâce aux moyens de freinage différentiels sera notée « M_{z_ref} » et s'exprimera en N.m.

Les constantes « ξ » et « ω » représenteront des caractéristiques dynamiques de l'angle de braquage des roues avant du véhicule.

La constante « ω_{f} » représentera quant à elle une caractéristique dynamique d'une perturbation arbitraire « w » bornée appliquée au véhicule.

La vitesse de braquage désignera la vitesse angulaire de braquage des roues avant directrices.

A titre d'hypothèse, la route sur laquelle évolue le véhicule automobile est supposée rectiligne et plates. Elles s'étendent selon un axe principal.

Avant de décrire le procédé qui sera exécuté par le calculateur 13 pour mettre en œuvre l'invention, on pourra dans une première partie de cet exposé résumer quelles sont les contraintes choisies pour assurer un pilotage efficace du véhicule automobile, puis décrire les calculs qui ont permis d'aboutir aux contrôleurs permettant de mettre en œuvre l'invention, de façon à bien comprendre d'où proviennent ces calculs et sur quels ressorts ils s'appuient.

Sur la partie X1 de la figure 6, on a modélisé le processus de calcul de la consigne saturée d'angle de braquage δ_{ref} à transmettre à l'actionneur 31 de direction assistée, et de la consigne de moment de lacet M_{z_ref} à transmettre aux actionneurs 32 de freinage différentiel.

Sur la partie X2, on a plutôt schématisé comment ces consignes interagissent avec les actionneurs 31, 32.

Sur cette seconde partie X2, on peut observer quelles contraintes sont appliquées aux consignes précitées de façon à garantir la stabilité et la contrôlabilité du véhicule par le conducteur lorsqu'un système d'aide à la conduite de type AES est activé.

La première contrainte Z5, qui s'applique à la consigne saturée d'angle de braquage δ_{ref}, est une saturation en vitesse. Il s'agit plus précisément d'une limitation de la vitesse de braquage du véhicule. Le seuil de vitesse angulaire de braquage utilisé est noté v.

Cette première contrainte permet, grâce à une boucle de rétroaction fournissant l'angle de braquage courant δ_{_meas} et à un contrôleur K_{DAE}, d'obtenir un couple moteur provisoire.

La seconde contrainte Z7, qui s'applique à la sortie du contrôleur K_{DAE}, est une saturation en amplitude. Il s'agit plus précisément d'une limitation de la valeur absolue du couple moteur provisoire précité. Le seuil de couple moteur utilisé est noté T_{EPS_saturation_1}.

Le bloc Z6 illustre un premier mécanisme d'inhibition de la régulation de la consigne saturée d'angle de braquage δ_{ref}. Ce premier mécanisme est prévu pour bloquer la régulation, et donc le calcul d'un quelconque couple moteur à fournir à l'actionneur 31 de direction assistée, lorsque la valeur absolue du couple exercé par le conducteur sur le volant dépasse un seuil noté ${T}_{Driver _ δ}^{ctrl}$.

La troisième contrainte Z8, qui s'applique à la consigne de moment de lacet M_{z_ref}, est une saturation en amplitude. Il s'agit plus précisément d'une limitation de la valeur de cette consigne de moment de lacet M_{z_ref} qui vise à empêcher que le freinage différentiel soit trop important et ne permette pas de garantir une stabilité et une contrôlabilité du véhicule qui soit suffisante. Le seuil de moment de lacet utilisé est appelé limite M_{z_max}.

La limite M_{z_max} utilisée pour cette saturation sera de préférence variable. Elle sera calculée (au bloc Z10) en fonction au moins de la vitesse de lacet r et de la vitesse V du véhicule. Elle pourra éventuellement aussi dépendre du couple exercé par le conducteur sur le volant.

La quatrième contrainte Z9, qui s'applique à la consigne de moment de lacet M_{z_ref} saturée en amplitude, est une saturation en vitesse. Il s'agit plus précisément d'une limitation de la vitesse de variation de la consigne de moment de lacet M_{z_ref}. Le seuil de vitesse de variation de moment de lacet utilisé est noté ${∇}_{Mz}^{ctrl}$ (il apparaitra également sous la notion simplifiée *∇*).

Cette quatrième contrainte permet, grâce à un contrôleur K_{Brake}, d'obtenir un couple de freinage à fournir aux actionneurs 32 du système de freinage différentiel.

Cette quatrième contrainte est considérée comme préférentielle afin d'améliorer la contrôlabilité du véhicule lors de la coupure ou de la reprise de la consigne en moment de lacet M_{z_ref}.

Le bloc Z11 illustre un second mécanisme d'inhibition de la régulation de la consigne de moment de lacet M_{z_ref}. Ce second mécanisme est prévu pour bloquer la régulation, et donc le calcul d'un quelconque couple de freinage différentiel, lorsque la valeur absolue du couple exercé par le conducteur sur le volant dépasse un seuil noté ${T}_{Driver _ Mz}^{ctrl}$.

Les seuils précités v, T_{EPS_saturation_1} et ${∇}_{Mz}^{ctrl}$ **sont** obtenus en réalisant des essais routiers à l'aide d'un véhicule d'essai du même modèle que les véhicules sur lesquels l'invention sera implémentée.

En particulier, le seuil T_{EPS_saturation_1} est obtenu pour différentes vitesses V du véhicule, puisqu'il varie en fonction de ce paramètre. Il est obtenu en réalisant des essais alors que la fonction de freinage différentiel est désactivée.

De la même façon, les seuils v et ${∇}_{Mz}^{ctrl}$ sont obtenus au moyen d'essais routiers, pour différentes vitesses V du véhicule, puisqu'ils varient en fonction de ce paramètre.

La limite M_{z_max} est quant à elle obtenue de façon particulière, à l'aide du bloc Z10.

Cette limite est choisie égale à une variable, notée ${\overline{M}}_{z}^{ctrl}$, si la vitesse de lacet r du véhicule dépasse, en valeur absolue, un seuil de vitesse de lacet qui sera ici noté r^{ctrl}. La limite M_{z_max} sera sinon choisie égale à zéro.

On peut écrire cela sous la forme de l'équation Math1 suivante :

${M}_{z _ max} = \left\{\begin{matrix}{\overline{M}}_{z}^{ctrl} & if \left|r\right| \geq {\overline{r}}^{ctrl} \\ 0 & else\end{matrix}\right.$

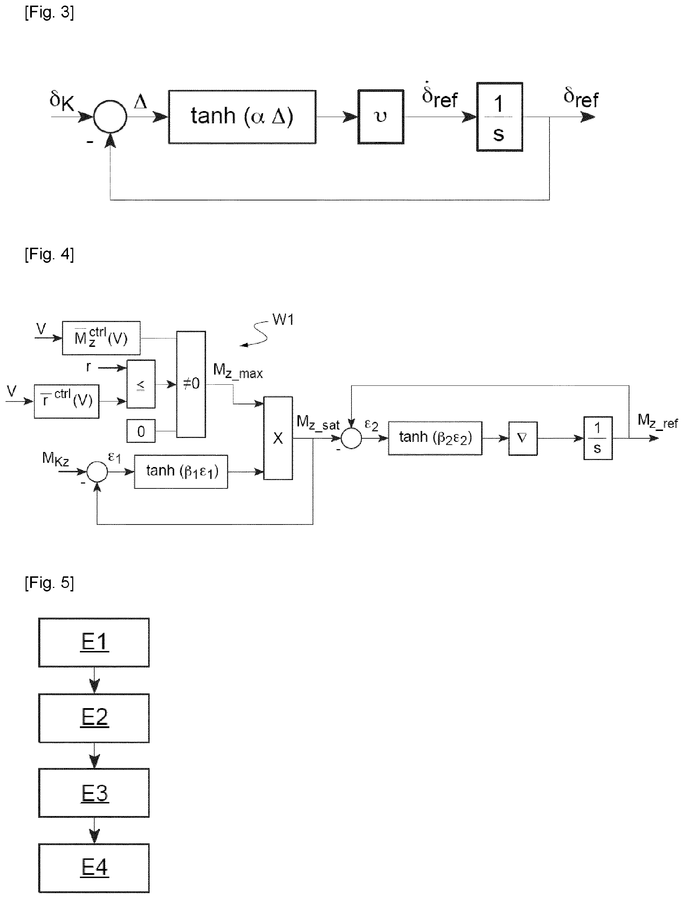

On peut également représenter cela graphiquement, comme le montre la partie W1 de la figure 4.

Le seuil de vitesse de lacet r^{ctrl} correspond à la vitesse de lacet maximale à laquelle le véhicule est toujours contrôlable par le conducteur, à une vitesse V donnée.

Le seuil de vitesse de lacet r^{ctrl} et la variable ${\overline{M}}_{z}^{ctrl}$ sont soit déterminés par des essais le véhicule d'essais, soit calculés, soit calculés puis ajustés au moyen d'essais. C'est la première solution qui est ici appliquée.

Pour cela, au cours d'une première étape, on désactive la fonction de freinage différentiel du véhicule d'essais, puis on réalise des essais de contrôlabilité du véhicule afin de déterminer les seuils utilisables pour les contraintes Z5 et Z7.

Puis, au cours d'une seconde étape, on réactive la fonction de freinage différentiel du véhicule puis on réalise de nouveaux essais de contrôlabilité afin de déterminer les seuils d'angles de braquage δₘₐₓ(V) maximum pour une pluralité de vitesses différentes (par exemple avec un pas de 5km/h). En variante, ces seuils d'angle de braquage pourraient être obtenus par calcul.

Enfin, au cours d'une troisième étape, on en déduit le seuil de vitesse de lacet r^{ctrl} et la variable ${\overline{M}}_{z}^{ctrl}$.

Le seuil de vitesse de lacet r^{ctrl} est plus précisément obtenu en modélisant le véhicule au moyen d'un modèle bicyclette (décrit plus précisément ci-après), puis en en déduisant l'équation suivante :

${\overline{r}}^{ctrl} \left(V\right) = \frac{\left({l}_{f}+{l}_{r}\right) V}{{\left({l}_{f}+{l}_{r}\right)}^{2} + k . {V}^{2}} {δ}_{max} \left(V\right)$

Dans cette équation, k est le gradient de sous-virage, qui se calcule au moyen de l'équation suivante :

$k = m \left(\frac{{l}_{r}}{{C}_{f}}-\frac{{l}_{f}}{{C}_{r}}\right)$

Grâce à cette même modélisation, il est possible d'obtenir la variable ${\overline{M}}_{z}^{ctrl}$ au moyen de l'équation suivante :

${\overline{M}}_{z}^{ctrl} \left(V\right) = \frac{{C}_{f} {C}_{r} \left({l}_{f}+{l}_{r}\right)}{\left({C}_{f}+{C}_{r}\right)} {δ}_{max} \left(V\right)$

On peut maintenant s'intéresser aux deux mécanismes d'inhibition représentés sur la figure 6 par les blocs Z6 et Z11. Ces deux mécanismes font intervenir chacun un seuil ${T}_{Driver _ δ}^{ctrl} , {T}_{Driver _ Mz}^{ctrl}$.

Le seuil ${T}_{Driver _ δ}^{ctrl}$ utilisé pour annuler la consigne d'angle de braquage δ_{ref} est déterminé par des essais de contrôlabilité réalisés sur le véhicule, lorsque la fonction de freinage différentiel est désactivée. Ce seuil varie en fonction de la vitesse V du véhicule.

Le seuil ${T}_{Driver _ Mz}^{ctrl}$ utilisé pour annuler la consigne de moment de lacet M_{z_ref} est déterminé par des essais de contrôlabilité lorsque le système de freinage différentiel est actif. Ce seuil varie également en fonction de la vitesse V du véhicule.

On pourra noter que ces seuils satisfont l'inégalité suivante :

${T}_{Driver _ Mz}^{ctrl} \left(V\right) \leq {T}_{Driver _ Saturation _ 1}^{ctrl} \left(V\right) \leq {T}_{Driver _ δ}^{ctrl} \left(V\right)$

Dans cette inéquation, la variable ${T}_{Driver _ Saturation _ 1}^{ctrl}$ est issue du seuil *T*_{*EPS_Saturation_*1}. Pour cela, compte tenu de la fonction f correspondant à la loi d'assistance de l'actionneur 31 de direction assisté, on peut écrire :
${T}_{Driver _ Saturation _ 1}^{ctrl} \left(V\right) = {f}^{- 1} \left({T}_{EPS _ Saturation _ 1}, V\right)$

A ce stade de la description, on peut résumer la procédure permettant d'obtenir les valeurs des seuils et variables précités afin de garantir la contrôlabilité du véhicule en s'appuyant sur la figure 5.

Comme le montre cette figure, lors d'une première étape E1, alors que la fonction de freinage différentielle du véhicule d'essais est désactivée, on pratique des essais de contrôlabilité afin d'obtenir les valeurs des seuils *T*_{*EPS_Saturation_*1} et ${T}_{Driver _ δ}^{ctrl}$*.*

Puis, lors d'une deuxième étape E2, la fonction de freinage différentiel étant réactivée, on pratique de nouveaux essais de contrôlabilité afin d'obtenir les valeurs des angles de braquage maximum *δₘₐₓ.*

A cette étape, on calcule également la valeur du seuil ${T}_{Driver _ Saturation _ 1}^{ctrl}$.

Lors d'une troisième étape E3, compte tenu des angles de braquage maximum*δₘₐₓ*, on calcule les seuils ${\overline{M}}_{z}^{ctrl}$ et *r̅^{ctrl}*.

Enfin, au cours d'une quatrième étape E4, on utilise les résultats des essais de contrôlabilité pour affiner les valeurs des seuils ${\overline{M}}_{z}^{ctrl}$, *r̅^{ctrl}* et pour déterminer les valeurs du seuil ${∇}_{Mz}^{ctrl}$ et du seuil du couple conducteur ${T}_{Driver _ Mz}^{ctrl}$*.*

On peut maintenant mettre en équation les différentes contraintes précitées et la manière selon laquelle le choix entre le braquage du volant et le système de freinage différentiel est opéré pour piloter le véhicule.

Pour cela, on peut se référer à la partie gauche X1 de la figure 6.

Sur cette figure, le bloc Z1 correspond au bloc qui permet de déterminer la trajectoire à suivre pour éviter l'obstacle 20. La façon de déterminer cette trajectoire ne faisant pas l'objet de la présente invention, elle ne sera pas ici décrite. Ce bloc Z1 permet alors de déterminer, lorsque la fonction AES est activée, la consigne d'écart latéral y_{L-ref} et l'angle relatif de cap Ψ_{L}.

Le bloc Z2 est celui qui permet d'opérer un choix entre le système de direction et le système de freinage différentiel pour suivre au mieux la trajectoire d'évitement. Il permet de déterminer la valeur d'un coefficient α_{DB} qui illustre la proportion du freinage différentiel et du braquage à appliquer. Lorsque sa valeur est nulle, le freinage différentiel est désactivé, et lorsque sa valeur est maximale (égal à 1), c'est le braquage qui est désactivé. Ce bloc sera décrit en détail ci-après.

Le bloc Z3 correspond à la fonction mathématique qui permet de modéliser les contraintes Z5 et Z7 précitées. Il reçoit en entrée la consigne non saturée d'angle de braquage δ_{K}.

Le bloc Z4 correspond à la fonction mathématique qui permet de modéliser les contraintes Z8 et Z9 précitées. Il reçoit en entrée la consigne non saturée de moment de lacet M_{Kz}.

Ces consignes non saturées sont obtenues à l'aide de contrôleurs notés K_{δ} pour le calcul de la consigne non saturée d'angle de braquage δ_{K}, et K_{M} pour le calcul de la consigne non saturée de moment de lacet M_{Kz}. Elles dépendent du coefficient α_{DB}.

Pour comprendre les calculs sous-tendant ces deux blocs, on peut considérer que le comportement dynamique du véhicule peut être modélisé au moyen de l'équation Math7 suivante.$\left(\begin{matrix}\dot{β} \\ \dot{r} \\ {\dot{ψ}}_{L} \\ {\dot{e}}_{{y}_{L}} \\ {δ}^{¨} \\ \dot{δ} \\ {{y}^{¨}}_{L _ ref}\end{matrix}\right) = \left[\begin{matrix}- \frac{{C}_{f} + {C}_{r}}{mV} & 1 + \frac{{C}_{r} {l}_{r} - {C}_{f} {l}_{f}}{{mV}^{2}} & 0 & 0 & 0 & \frac{{C}_{f}}{mV} & 0 \\ - \frac{{C}_{f} {l}_{f} - {C}_{r} {l}_{r}}{J} & - \frac{{C}_{r} {l}_{r}^{2} - {C}_{f} {l}_{f}^{2}}{JV} & 0 & 0 & 0 & \frac{{C}_{f} {l}_{f}}{J} & 0 \\ 0 & 1 & 0 & 0 & 0 & 0 & 0 \\ V & {l}_{s} & V & 0 & 0 & 0 & - 1 \\ 0 & 0 & 0 & 0 & - 2 ξω & - {ω}^{2} & 0 \\ 0 & 0 & 0 & 0 & 1 & 0 & 0 \\ 0 & 0 & 0 & 0 & 0 & 0 & - {ω}_{f}\end{matrix}\right] \left(\begin{matrix}β \\ r \\ {ψ}_{L} \\ {e}_{{y}_{L}} \\ \dot{δ} \\ δ \\ {\dot{y}}_{L _ ref}\end{matrix}\right) + \left[\begin{matrix}0 \\ 0 \\ 0 \\ 0 \\ {ω}^{2} \\ 0 \\ 0\end{matrix}\right] {δ}_{ref} + \left[\begin{matrix}0 \\ 0 \\ 0 \\ 0 \\ 0 \\ 0 \\ {ω}_{f}\end{matrix}\right] w$

Ce modèle est un modèle bicyclette amélioré.

Il ne permet toutefois pas en soit de limiter l'amplitude et la vitesse de braquage des roues avant 11 du véhicule, ni le moment de freinage différentiel appliqué aux roues du véhicule, ni même la variation de ce moment de freinage. Or de telles limitations s'avèrent particulièrement importantes pour assurer au conducteur du véhicule d'être en mesure de reprendre le contrôle du véhicule à tout moment.

La saturation de la vitesse de braquage peut être mise en équation de la façon suivante :

$\left|{\dot{δ}}_{ref}\right| \leq υ$

Dans cette équation Math 8, le seuil *υ* est par exemple égale à 0,0491 Rad/s, ce qui correspond à 0,785 Rad/s au niveau du volant (c'est-à-dire 45°/s) si le coefficient de démultiplication de la direction est égal à 16.

Comme le montre la figure 3, le limiteur de vitesse de braquage est particulier en ce sens qu'il forme un pseudo-contrôleur (c'est-à-dire un contrôleur réalisant des calculs simples et limités) en boucle fermée qui comporte :
- une fonction de transfert en chaîne directe égale au produit du seuil υ (pour respecter la condition édictée par l'équation Math 8), d'un intégrateur en 1/s, et d'un correcteur qui est une fonction type tangente hyperbolique de Δ.α,
- une fonction de transfert en chaîne indirecte (ou « chaîne de rétroaction ») égale à un.

Par fonction type tangente hyperbolique, on entend les différentes fonctions ayant une forme proche de la fonction tangente hyperbolique, ce qui inclut notamment les fonctions trigonométriques inverses (telle que arctangente), la fonction d'erreur (couramment notée erf), la fonction Gudermannian (couramment notée gd) et la fonction trigonométrique hyperbolique (telle que tangente hyperbolique).

Il reçoit en entrée la consigne non saturée d'angle de braquage δ_{ref} et transmet en sortie la consigne saturée d'angle de braquage δ_{ref}.

Sur cette figure, le coefficient Δ correspond à l'écart entre les variables δ_{K} et δ_{ref}. Le coefficient α est une constante comprise entre 0 et l'infini, qui est le seul paramètre permettant de jouer sur le caractère rapide ou souple du limiteur de vitesse de braquage.

Ce limiteur de vitesse de braquage a ainsi pour avantage d'être simple à mettre au point puisqu'il suffit de régler le coefficient α. Il permet d'assurer une commande continue et lisse (infiniment dérivable).

Pour cela, compte tenu de la forme de ce limiteur de vitesse de braquage L2, on peut écrire l'équation Math9 :

${\dot{δ}}_{ref} = υ . tanh \left(∝\left({δ}_{K}-{δ}_{ref}\right)\right)$

On obtient ainsi un modèle de contrôlabilité du véhicule qui est pseudo-linéaire.

Plus précisément, on peut alors introduire le paramètre θ_{δ} suivant :

${θ}_{δ} = \frac{tanh \left(∝.\left({δ}_{K}-{δ}_{ref}\right)\right)}{∝ . \left({δ}_{K}-{δ}_{ref}\right)}$

Puis réécrire l'équation Math 10 sous la forme :

${\dot{δ}}_{ref} = - υ . α . {θ}_{δ} . {δ}_{ref} + υ . α . {θ}_{δ} . {δ}_{K}$

Cette équation Math 11 est caractéristique d'une représentation d'état et elle montre que le modèle de limiteur de variation de consigne est linéaire en fonction du paramètre θ_{δ}.

Il est alors possible, sur cette base, de déterminer le contrôleur qui assure un bon suivi de la trajectoire d'évitement T0, qui satisfait le modèle limiteur de variation de consigne et qui respecte la condition édictée par le coefficient α_{DB}.

La saturation de la consigne de moment de lacet M_{z_ref} peut être mise en équation de la façon suivante :

$\left|{M}_{z _ ref}\right| \leq {M}_{z _ max}$

La saturation de la vitesse de variation de la consigne de moment de lacet M_{z_ref} peut être mise en équation de la façon suivante :

$\left|{\dot{M}}_{z _ ref}\right| \leq {∇}_{Mz}^{ctrl}$

Selon l'invention, on souhaite limiter l'amplitude et la vitesse de variation de la consigne de moment de lacet M_{z_ref} non pas en imposant un seuil brutal, mais plutôt en utilisant un limiteur d'amplitude de consigne et un limiteur de variation de consigne.

En référence à la figure 4, on peut tout d'abord décrire le limiteur d'amplitude qui sera ici utilisé pour modifier la consigne non saturée de moment de lacet M_{Kz} afin de générer une consigne semi-saturée de moment de lacet M_{z_sat}.

Ce limiteur d'amplitude est particulier en ce sens qu'il forme un pseudo-contrôleur en boucle fermée qui comporte :
- une fonction de transfert en chaîne directe égale au produit de la limite M_{z_max}, (pour respecter la condition édictée par l'équation Math 12) et d'un correcteur qui est une fonction type tangente hyperbolique de β₁.ε₁,
- une fonction de transfert en chaîne indirecte (ou « chaîne de rétroaction ») égale à un.

Sur cette figure 4, le coefficient ε₁ correspond à l'écart entre les variables M_{z_sat} et M_{Kz}. Le coefficient β₁ est une constante comprise entre 0 et l'infini, qui est le seul et unique paramètre permettant de jouer sur le caractère rapide ou souple du limiteur d'amplitude.

L'utilisation d'un tel pseudo-contrôleur permet non seulement de bien limiter la consigne de moment de lacet M_{z_ref} dans le temps, mais en outre d'assurer une continuité de la variation de cette consigne.

Compte tenu de la forme de ce limiteur d'amplitude, on peut écrire l'équation Math14 :

${M}_{z _ sat} = {M}_{z _ max} . tanh \left({β}_{1}.\left({M}_{z _ sat}-{M}_{Kz}\right)\right)$

Comme le montre la figure 4, le limiteur de vitesse de variation du moment de lacet est également particulier en ce sens qu'il forme un pseudo-contrôleur en boucle fermée qui comporte :
- une fonction de transfert en chaîne directe égale au produit de la constante ${∇}_{Mz}^{ctrl}$ (pour respecter la condition édictée par l'équation Math 13), d'un intégrateur en 1/s, et d'un correcteur qui est une fonction type tangente hyperbolique de β₂.ε₂,
- une fonction de transfert en chaîne indirecte (ou « chaîne de rétroaction ») égale à un.

Il reçoit en entrée la consigne semi-saturée de moment de lacet M_{z_sat} et transmet en sortie la consigne de moment de lacet M_{z_ref}.

Sur cette figure, le coefficient ε₂ correspond à l'écart entre les variables M_{z_ref} et M_{z_sat}. Le coefficient β₂ est une constante comprise entre 0 et l'infini, qui est le seul paramètre permettant de jouer sur le caractère rapide ou souple du limiteur de vitesse.

L'utilisation d'un tel correcteur permet non seulement de bien limiter les variations de moment de lacet dans le temps, mais en outre d'assurer une continuité de cette variation.

Compte tenu de la forme de ce limiteur de vitesse, on peut écrire l'équation Math15 :

${\dot{M}}_{z _ ref} = {∇}_{Mz}^{ctrl} . tanh \left({ε}_{2}\left({M}_{z _ sat}-{M}_{z _ ref}\right)\right)$

On obtient ainsi un modèle de contrôlabilité du véhicule qui est pseudo-linéaire.

On peut maintenant introduire quelques variables pour simplifier les expressions des équations Math 14 et Math 15 afin de représenter le modèle complet de façon quasi-linéaire (c'est-à-dire de façon LPV, de l'anglais « Linear Parameter Varying »), sous une forme de représentation d'état.

L'équation Math 14 peut s'écrire sous la forme d'une équation Math16 :

${M}_{{z}_{sat}} = {M}_{z _ max} . {β}_{1} . \left({M}_{{z}_{sat}}-{M}_{Kz}\right) ρ$
avec

$ρ = \frac{tanh \left({β}_{1}\left({M}_{zK}-{M}_{z _ sat}\right)\right)}{{β}_{1} \left({M}_{zK}-{M}_{z _ sat}\right)}$

**On** peut alors introduire le paramètre θ_{Δ} suivant :

${θ}_{Δ} = \frac{ρ}{1 + Δ {β}_{1} ρ} \frac{Δ}{{\overline{M}}_{z}^{ctrl}}$

Puis on peut réécrire l'équation Math 15 sous la forme d'une équation Math19 :

${\dot{M}}_{z _ ref} = - {a}_{1} {θ}_{∇} {M}_{z _ ref} + {a}_{2} {θ}_{∇ Δ} {M}_{zK}$

Avec

${a}_{1} = ∇ {β}_{2}$

${a}_{2} = ∇ {\overline{M}}_{z} {β}_{1} {β}_{2}$

${θ}_{∇ Δ} = {θ}_{∇} {θ}_{Δ}$

${θ}_{∇} = \frac{tanh \left({β}_{2}\left({M}_{z _ sat}-{M}_{z _ ref}\right)\right)}{{β}_{2} \left({M}_{z _ sat}-{M}_{z _ ref}\right)}$

L'équation Math 19 est caractéristique d'une représentation d'état et elle montre que le modèle complet de limiteur d'amplitude et de vitesse de moment de lacet est quasi-linéaire en fonction des paramètres exogènes *θ*_{*∇*Δ} et *θ_{∇}* (lesquels paramètres sont calculables lorsque le véhicule roule).

On peut alors enrichir le modèle bicyclette de l'équation Math 7 avec cette représentation d'état pour obtenir un nouveau modèle utilisable.

De cette façon, il est possible de faire la synthèse des contrôleurs (représentés sur la figure 6 par K_{δ}, K_{M} et par les blocs Z3 et Z4) par une méthode d'optimisation telle que celle des inégalités matricielles linéaires.

Ces contrôleurs peuvent alors être implémentés dans les calculateurs 13 des véhicules automobiles 10 de la gamme du véhicule automobile sur lequel les essais ont été réalisés.

A titre d'exemple, on peut décrire comment la synthèse du premier contrôleur (celui qui permet d'obtenir la consigne d'angle de braquage δ_{ref}) est réalisée. La synthèse du second contrôleur (celui qui permet d'obtenir la consigne de moment de lacet) sera faite de façon homologue et ne sera donc pas décrite ici en détail.

Le modèle bicyclette de l'équation Math 7 enrichi s'écrit :

$\left(\begin{matrix}\dot{β} \\ \dot{r} \\ {\dot{ψ}}_{L} \\ {\dot{e}}_{{y}_{L}} \\ {δ}^{¨} \\ \dot{δ} \\ {{y}^{¨}}_{{L}_{ref}} \\ {\dot{δ}}_{ref}\end{matrix}\right) = \left[\begin{matrix}- \frac{{C}_{f} + {C}_{r}}{mV} & 1 + \frac{{C}_{r} {l}_{r} - {C}_{f} {l}_{f}}{{mV}^{2}} & 0 & 0 & 0 & \frac{{C}_{f}}{mV} & 0 & 0 \\ - \frac{{C}_{f} {l}_{f} - {C}_{r} {l}_{r}}{J} & - \frac{{C}_{r} {l}_{r}^{2} + {C}_{f} {l}_{f}^{2}}{JV} & 0 & 0 & 0 & \frac{{C}_{f} {l}_{f}}{J} & 0 & 0 \\ 0 & 1 & 0 & 0 & 0 & 0 & 0 & 0 \\ V & {l}_{s} & V & 0 & 0 & 0 & - 1 & 0 \\ 0 & 0 & 0 & 0 & - 2 ξω & - {ω}^{2} & 0 & {ω}^{2} \\ 0 & 0 & 0 & 0 & 1 & 0 & 0 & 0 \\ 0 & 0 & 0 & 0 & 0 & 0 & - {ω}_{f} & 0 \\ 0 & 0 & 0 & 0 & 0 & 0 & 0 & - {vαθ}_{d}\end{matrix}\right] \left(\begin{matrix}β \\ r \\ {ψ}_{L} \\ {e}_{{y}_{L}} \\ \dot{δ} \\ δ \\ {\dot{y}}_{L _ ref} \\ {δ}_{ref}\end{matrix}\right) + \left[\begin{matrix}0 \\ 0 \\ 0 \\ 0 \\ 0 \\ 0 \\ 0 \\ {vαθ}_{d}\end{matrix}\right] {δ}_{k} + \left[\begin{matrix}0 \\ 0 \\ 0 \\ 0 \\ 0 \\ 0 \\ {ω}_{f} \\ 0\end{matrix}\right] w$

On peut alors considérer un vecteur d'état x, que l'on peut écrire sous la forme :

$x = {\left(β r {ψ}_{L} {e}_{{y}_{L}} \dot{δ} δ {\dot{y}}_{L _ ref} {δ}_{ref}\right)}^{T}$

L'objectif est alors de déterminer la forme du contrôleur K_{δ} qui est le retour d'état permettant de calculer la consigne d'angle de braquage non saturée δ_{K} sur la base de ce vecteur d'état x.

Pour comprendre comment déterminer un contrôleur K_{δ} qui convienne tant en terme de stabilité que de rapidité, on peut écrire notre modèle comportemental sous une forme générique :

$\left\{\begin{matrix}\dot{x} = A \left({θ}_{δ}\right) x + {B}_{u} \left({θ}_{s}\right) . {δ}_{ref} + {B}_{w} w \\ y = {C}_{y} . x\end{matrix}\right.$

Dans cette équation, C_{y} est la matrice identité, A est une matrice dynamique, Bᵤ est une matrice de commande et B_{w} est une matrice de perturbation, que l'on peut écrire sous la forme :

$A = \left[\begin{matrix}- \frac{{C}_{f} + {C}_{r}}{mV} & 1 + \frac{{C}_{r} {l}_{r} - {C}_{f} {l}_{f}}{{mV}^{2}} & 0 & 0 & 0 & \frac{{C}_{f}}{mV} & 0 & 0 \\ - \frac{{C}_{f} {l}_{f} - {C}_{r} {l}_{r}}{J} & - \frac{{C}_{r} {l}_{r}^{2} + {C}_{f} {l}_{f}^{2}}{JV} & 0 & 0 & 0 & \frac{{C}_{f} {l}_{f}}{J} & 0 & 0 \\ 0 & 1 & 0 & 0 & 0 & 0 & 0 & 0 \\ V & {l}_{s} & V & 0 & 0 & 0 & - 1 & 0 \\ 0 & 0 & 0 & 0 & - 2 ξω & - {ω}^{2} & 0 & {ω}^{2} \\ 0 & 0 & 0 & 0 & 1 & 0 & 0 & 0 \\ 0 & 0 & 0 & 0 & 0 & 0 & - {ω}_{f} & 0 \\ 0 & 0 & 0 & 0 & 0 & 0 & 0 & - {vαθ}_{d}\end{matrix}\right] , {B}_{u} = \left[\begin{matrix}0 \\ 0 \\ 0 \\ 0 \\ 0 \\ 0 \\ 0 \\ {vαθ}_{d}\end{matrix}\right] , {B}_{w} = \left[\begin{matrix}0 \\ 0 \\ 0 \\ 0 \\ 0 \\ 0 \\ {ω}_{f} \\ 0\end{matrix}\right] .$

Le contrôleur K_{δ}, qui est défini comme un retour d'état statique, peut quant à lui s'exprimer sous la forme :

${δ}_{K} = {K}_{δ} . x$

Pour trouver un contrôleur K_{δ} optimal, on peut utiliser différentes méthodes.

La méthode utilisée ici est celle des inégalités matricielles linéaires. Elle est ainsi réalisée à partir de critères d'optimisation convexe sous contraintes d'inégalités matricielles linéaires.

L'objectif est plus précisément d'optimiser les gains de la boucle fermée définie par le contrôleur K_{δ} en jouant sur le choix des pôles.

Les inéquations matricielles utilisées sont au nombre de trois et sont définies par les inéquations suivantes.

${A}_{i} Q + {B}_{i} R + {\left({A}_{i}Q+{B}_{i}R\right)}^{T} + 2 μQ ≺ 0$

$\left[\begin{matrix}- γQ & {A}_{i} Q + {B}_{i} R \\ ∗ & - γQ\end{matrix}\right] ≺ 0$

$\left[\begin{matrix}sin \left(φ\right) \left({A}_{i}Q+{B}_{i}R+{\left({A}_{i}Q+{B}_{i}R\right)}^{T}\right) & cos \left(φ\right) \left({A}_{i}Q+{B}_{i}R-{\left({A}_{i}Q+{B}_{i}R\right)}^{T}\right) \\ ∗ & sin \left(φ\right) \left({A}_{i}Q+{B}_{i}R+{\left({A}_{i}Q+{B}_{i}R\right)}^{T}\right)\end{matrix}\right] ≺ 0$

Dans ces inéquations, l'indice i est égal à 1 ou 2, et on peut alors définir les matrices Aᵢ et Bᵢ de la façon suivante :

$\begin{matrix}{A}_{1} = A \left({θ}_{δmin}\right) \\ {A}_{2} = A \left({θ}_{δmax}\right) \\ {B}_{1} = {B}_{u} \left({θ}_{δmin}\right) \\ {B}_{2} = {B}_{u} \left({θ}_{δmax}\right)\end{matrix}$

Une matrice de la forme $\left[\begin{matrix}X & Y \\ {Y}^{T} & W\end{matrix}\right]$ est écrite sous la forme $\left[\begin{matrix}X & Y \\ ∗ & W\end{matrix}\right]$.

Le contrôleur K_{δ} est défini par l'équation :${K}_{δ} = R . {Q}^{-1}$

La vitesse du véhicule est supposée constante (donc toutes les matrices du système sont considérées constantes).

Les trois inéquations permettent de s'assurer que la dynamique de la boucle fermée reste limitée. En effet, grâce à ces contraintes, les pôles de la boucle fermée se retrouvent bornés dans une zone définie par un rayon γ, une distance minimale par rapport à l'axe imaginaire µ, et un angle d'ouverture φ.

Cette méthode s'avère efficace lorsqu'il s'agit de déterminer à chaque instant l'angle de volant de façon raisonnable (et maîtrisable par un conducteur aux compétences moyennes) et de manière réalisable par l'actionneur. Ces contraintes assurent également la stabilité de la boucle fermée.

L'objectif est ici de minimiser le rayon γ. Une fois le contrôleur K_{δ} obtenu, on peut obtenir calculer la consigne d'angle de braquage non saturée au moyen de la formule suivante :

${δ}_{K} = {K}_{δ} x = \left[{k}_{β} {k}_{r} {k}_{{ψ}_{L}} {k}_{{e}_{{y}_{L}}} {k}_{\dot{δ}} {k}_{δ} {k}_{{\dot{y}}_{L _ ref}} {k}_{{δ}_{ref}}\right] \left(\begin{matrix}β \\ r \\ {ψ}_{L} \\ {e}_{{y}_{L}} \\ \dot{δ} \\ δ \\ {\dot{y}}_{L _ ref} \\ {δ}_{ref}\end{matrix}\right)$

On a introduit dans les trois inéquations matricielles les valeurs θ_{δmin} et θ_{δmax}.

La valeur de θ_{δ}, qui est lié à l'écart entre δ_{K} et δ_{ref}, reflète le niveau de violation par le contrôleur K_{δ} de la limite de contrôlabilité énoncée par l'équation Math 8.

Par définition, θ_{δ} est compris entre 0 (exclu) et 1 (inclus). Lorsque θ_{δ} est égal à 1, la consigne non saturée d'angle au volant δ_{K} calculé respecte bien la limite de contrôlabilité. Lorsqu'il est proche de 0, la consigne non saturée d'angle au volant δ_{K} calculé présente une valeur qui impose une trop grande dynamique de braquage, ce qui génère un risque d'instabilité du véhicule. Quand θ_{δ} prend des valeurs intermédiaires entre 0 et 1, la limite de contrôlabilité n'est pas respectée mais il est possible qu'il n'y pas de risque d'instabilité du véhicule.

En d'autres termes, le choix des valeurs θ_{δmin} et θ_{δmax} a un impact direct sur la performance et sur la robustesse du contrôleur K_{δ}. Plus la plage [θ_{δmin},θ_{δmax}] est grande, moins le contrôleur K_{δ} est performant mais plus il est robuste. Au contraire, plus cette plage est petite, plus le contrôleur K_{δ} est performant mais moins il est robuste.

Logiquement la valeur θ_{δmax} est choisie égale à 1 (cas selon lequel le contrôleur K_{δ} fonctionne en mode linéaire, comme c'est d'ailleurs généralement le cas, sans violation de contrainte de contrôlabilité).

La détermination de la valeur θ_{δmin} nécessite ne revanche de faire un compromis entre performance et robustesse. La détermination de cette valeur revient à imposer un seuil maximal pour l'écart, en valeur absolue, entre δ_{K} et δ_{ref}.

En résumé, la méthode permettant de calculer le contrôleur K₃ qui convienne à un modèle particulier de véhicule automobile consiste à se fixer des valeurs de α_{DB}, v, α, θ_{δmin} et θ_{δmax}.

Elle consiste ensuite à déterminer les coefficients des matrices Aᵢ, Bᵢ, puis à résoudre les équations Math 29 à Math 31 afin d'en déduire un contrôleur K_{δ} qui assure un bon suivi de la trajectoire d'évitement T0 et qui satisfait le modèle limiteur de variation de consigne de braquage.

Le bloc Z2 peut maintenant être décrit plus en détail.

On peut ainsi décrire comment le coefficient α_{DB}, dont on rappelle qu'il illustre la proportion de freinage différentiel et de braquage à appliquer, est obtenu.

Pour cela, une variable préliminaire α_{DB_raw} est tout d'abord choisie.

Ce choix est opéré uniquement si le couple exercé par le conducteur sur le volant est inférieur ou égal, en valeur absolue, au seuil ${T}_{Driver _ Mz}^{ctrl}$.

En effet, s'il est supérieur à ce seuil, aucune consigne ne sera calculée.

Dans le cas où il est inférieur ou égal au seuil ${T}_{Driver _ Mz}^{ctrl}$, la variable préliminaire α_{DB_raw} est choisie égale à 1 si les deux conditions cumulatives suivantes sont remplies. Elle est sinon choisie égale à zéro.

La première condition est que la variable θ_{δ}, en valeur absolue, soit inférieure ou égale à une variable θ_{δ}^{min}, en valeur absolue.

Cette variable θ_{δ}^{min} est la valeur minimale de la variable θ_{δ} à laquelle le contrôleur de braquage seul K_{δ} peut stabiliser le véhicule. Il s'agit d'une variable puisqu'elle dépend de la vitesse V du véhicule.

En d'autres termes, la première condition consiste à vérifier si la consigne d'angle de braquage est saturée ou non.

La seconde condition est que la vitesse de lacet soit inférieure ou égale, en valeur absolue, au seuil de vitesse de lacet r^{ctrl}, en valeur absolue.

Une fois que la valeur (0 ou 1) de la variable préliminaire α_{DB_raw} a été choisi, il est possible de calculer le coefficient α_{DB} au moyen de l'équation suivante :

${α}_{DB} = \frac{{τ}_{DB}}{s + {τ}_{DB}} {α}_{DB _ raw}$

Dans cette équation, le paramètre *τ_{DB}* est une constante de temps qui permet de filtrer tout le changement brusque du coefficient α_{DB} pour garantir un bon ressenti du conducteur. La valeur de ce paramètre est donc réglable selon le ressenti qu'on souhaite que le conducteur ait.

Le paramètre s est la variable de Laplace.

A ce stade, on peut décrire le procédé qui sera exécuté par le calculateur 13 d'un des véhicules automobiles de la gamme précitée, pour mettre en œuvre l'invention.

Le calculateur 13 est ici programmé pour mettre en œuvre ce procédé de façon récursive, c'est-à-dire pas à pas, et en boucle.

Pour cela, au cours d'une première étape, le calculateur 13 vérifie que la fonction d'évitement autonome d'obstacle (AES) est activée.

Si tel est le cas, il tente de détecter la présence d'un éventuel obstacle se trouvant sur le trajet du véhicule automobile 10. Il utilise pour cela son télédétecteur RADAR ou LIDAR.

En l'absence d'obstacle, cette étape est répétée en boucles.

Dès qu'un obstacle 20 est détecté (voir figure 2), le calculateur 13 planifie une trajectoire d'évitement T0 permettant d'éviter cet obstacle 20.

Le calculateur 13 va alors chercher à définir des consignes de pilotage pour le système de direction conventionnel et pour le système de freinage différentiel permettant de suivre au mieux cette trajectoire d'évitement T0.

Il commence pour cela par calculer ou mesurer des paramètres, ces paramètres caractérisent notamment le comportement dynamique du véhicule, tels que :
- l'angle de braquage δ mesuré,
- la dérivée par rapport au temps de l'angle de braquage mesuré δ,
- la consigne saturée d'angle de braquage δ_{ref} obtenue au pas de temps précédent,
- la vitesse de lacet r,
- l'angle relatif de cap Ψ_{L},
- la dérivée par rapport au temps de la consigne d'écart latéral y_{L-ref},
- l'erreur de suivi de trajectoire e_{yL},
- l'angle de dérive β
- le coefficient α_{DB}.

Comme le montre la figure 6, le calculateur 13 utilise ensuite les contrôleurs K_{δ} et K_{M} enregistré dans sa mémoire. Ces contrôleurs vont donc permettre de déterminer les valeurs des consignes d'angles de braquage non saturée δ_{K} et de moment de lacet non saturé (M_{Kz}).

Les pseudo-contrôleurs représentés sur la figure 6 par les blocs Z3 et Z4 vont ensuite permettre d'en déduire les consignes saturées d'angle de braquage δ_{ref} et de moment de lacet M_{z_ref}. Ces consignes vont alors être transmises aux actionneurs 31, 32 afin de dévier le véhicule de sa trajectoire initiale.

En d'autres termes, c'est donc la combinaison du contrôleur K_{δ} et du pseudo-contrôleur représenté par le bloc Z3 qui va former un premier contrôleur global permettant de déterminer la consigne d'angle de braquage δ_{ref} sur la base des paramètres listés ci-dessus.

De la même façon, c'est la combinaison du contrôleur K_{M} et du pseudo-contrôleur représenté par le bloc Z4 qui va former un second contrôleur global permettant de déterminer la consigne de moment de lacet M_{z_ref} sur la base des paramètres listés ci-dessus.

La présente invention n'est nullement limitée au mode de réalisation décrit mais l'homme du métier saura y apporter toute variante conforme à l'invention.

## Revendications

1. Procédé de pilotage automatisé d'un véhicule automobile (10) comportant des roues (11, 12) parmi lesquelles au moins deux roues (11) sont directrices, comportant des étapes de :
- acquisition de paramètres (β, r, Ψ_{L}, e_{yL}, δ, δ_{ref}) relatifs à une trajectoire d'évitement d'un obstacle (20) par le véhicule automobile (10), et de
- calcul par un calculateur (13) d'une première consigne de pilotage (δ_{ref}) d'un actionneur (31) de braquage des roues (11) directrices et d'une seconde consigne de pilotage (M_{z_ref}) d'au moins un actionneur (32) de freinage différentiel des roues (11, 12), en fonction desdits paramètres (β, r, Ψ_{L}, e_{yL}, δ, δ_{ref}),
dans lequel la première consigne de pilotage (δ_{ref}) et la seconde consigne de pilotage (M_{z_ref}) sont chacune déterminées au moyen d'un contrôleur qui satisfait un modèle limiteur d'amplitude et/ou de variation de consigne, le procédé étant **caractérisée en ce que**
la première consigne de pilotage (δ_{ref}) et la seconde consigne de pilotage (M_{z_ref}) sont déterminées en fonction d'un coefficient (α_{DB}) fixant la contribution de chaque actionneur (31, 32), ledit coefficient (α_{DB}) étant calculé en fonction d'une vitesse de lacet (r) du véhicule automobile (10), d'un couple appliqué par le conducteur sur le volant du véhicule automobile (10), et d'un paramètre (θ_{δ}) dont la valeur varie selon que la première consigne de pilotage (δ_{ref}) est limitée ou non par le contrôleur.

2. Procédé selon la revendication précédente, dans lequel la première consigne de pilotage (δ_{ref}) et/ou la seconde consigne de pilotage (M_{z_ref}) est déterminée au moyen d'un contrôleur qui satisfait un modèle limiteur d'amplitude et de variation de consigne.

3. Procédé selon l'une des revendications précédentes, dans lequel le coefficient (α_{DB}) est calculé de façon à ce que :
- la seconde consigne de pilotage (M_{z_ref}) soit nulle si la valeur absolue d'un couple appliqué par un conducteur sur un volant du véhicule automobile (10) dépasse un seuil prédéterminé ( ${T}_{Driver _ Mz}^{ctrl}$),
- seul l'actionneur (31) de braquage des roues (11) directrices est utilisé lorsque la vitesse de lacet (r) du véhicule est supérieur à un seuil de contrôle (r^{ctrl}) et/ou lorsque la première consigne de pilotage (δ_{ref}) permet de stabiliser le véhicule automobile (10) à elle seule, et
- l'actionneur (31) de braquage des roues (11) directrices et l'actionneur (32) de freinage différentiel des roues (11, 12) sont utilisés en combinaison sinon.

4. Procédé selon la revendication précédente, dans lequel le coefficient (α_{DB}) est calculé de façon à varier de façon continue en fonction du temps.

5. Procédé selon l'une des revendications précédentes, dans lequel il est prévu d'interrompre la détermination de la première consigne de pilotage (δ_{ref}) lorsque la valeur absolue d'un couple appliqué par un conducteur sur un volant du véhicule automobile (10) dépasse un seuil prédéterminé ( ${T}_{Driver _ δ}^{ctrl}$).

6. Procédé selon l'une des revendications précédentes, dans lequel il est prévu d'interrompre la détermination de la seconde consigne de pilotage (M_{z_ref}) lorsque la valeur absolue d'un couple appliqué par un conducteur sur un volant du véhicule automobile (10) dépasse un seuil prédéterminé ( ${T}_{Driver _ Mz}^{ctrl}$).

7. Procédé selon l'une des revendications précédentes, dans lequel le contrôleur permettant de déterminer la seconde consigne de pilotage (M_{z_ref}) satisfait un modèle limiteur d'amplitude, de telle sorte que la seconde consigne de pilotage (M_{z_ref}) reste inférieure ou égale à une limite (M_{z_max}), et dans lequel ladite limite (M_{z_max}) est déterminée en fonction de la vitesse (V) et de la vitesse de lacet (r) du véhicule automobile (10).

8. Procédé selon l'une des revendications précédentes, dans lequel, pour calculer la première consigne de pilotage (δ_{ref}), il est prévu de déterminer une première consigne non saturée (δ_{K}) et d'en déduire la première consigne (δ_{ref}) au moyen d'un pseudo-contrôleur en boucle fermée ayant une fonction de transfert en chaîne directe qui comprend une fonction type tangente hyperbolique de l'écart (Δ) entre la première consigne non saturée (δ_{K}) et la première consigne (δ_{ref}).

9. Procédé selon l'une des revendications précédentes, dans lequel, pour calculer la seconde consigne (M_{z_ref}), il est prévu :
- de déterminer une seconde consigne non saturée (M_{Kz}) et d'en déduire une seconde consigne semi-saturée (M_{z-sat}) au moyen d'un pseudo-contrôleur en boucle fermée ayant une fonction de transfert en chaîne directe qui comprend une fonction type tangente hyperbolique de l'écart (ε₁) entre la seconde consigne non saturée (M_{Kz}) et la seconde consigne semi-saturée (M_{z-sat}), puis
- d'utiliser un autre pseudo-contrôleur en boucle fermée qui fournit en sortie la seconde consigne (M_{z_ref}) et dont la fonction de transfert en chaîne directe comprend une fonction type tangente hyperbolique de l'écart (ε₂) entre la seconde consigne semi-saturée (M_{z-sat}) et ladite seconde consigne (M_{z_ref}).

10. Véhicule automobile (10) comprenant un actionneur (31) de braquage des roues (11) directrices, un actionneur (32) de freinage différentiel des roues (11, 12), et un calculateur (13) pour piloter lesdits actionneurs (31, 32), **caractérisé en ce que** le calculateur (13) est programmé pour mettre en œuvre un procédé selon l'une des revendications 1 à 9.

## Patentansprüche

1. Verfahren zur automatischen Steuerung eines Kraftfahrzeugs (10), das Räder (11, 12) umfasst, von denen mindestens zwei Räder (11) lenkbar sind, umfassend die folgenden Schritte:
- Erfassen von Parametern (β, r, Ψ_{L}, e_{yL}, δ, δ_{ref}) bezüglich einer Trajektorie zum Ausweichen eines Hindernisses (20) durch das Kraftfahrzeug (10), und
- Berechnen, durch einen Rechner (13), eines ersten Steuerungssollwerts (δ_{ref}) eines Aktors (31) zum Einschlagen der lenkbaren Räder (11) und eines zweiten Steuerungssollwerts (M_{z_ref}) mindestens eines Aktors (32) zur Differentialbremsung der Räder (11, 12) in Abhängigkeit von den Parametern (β, r, Ψ_{L}, e_{yL}, δ, δ_{ref}), wobei der erste Steuerungssollwert (δ_{ref}) und der zweite Steuerungssollwert (M_{z_ref}) jeweils mittels eines Reglers bestimmt werden, der ein Amplitudenbegrenzer- und/oder Sollwertänderungsmodell erfüllt, wobei das Verfahren **dadurch gekennzeichnet ist, dass** der erste Steuerungssollwert (δ_{ref}) und der zweite Steuerungssollwert (M_{z_ref}) in Abhängigkeit von einem Koeffizienten (α_{DB}) bestimmt werden, der den Beitrag jedes Aktors (31, 32) festlegt, wobei der Koeffizient (α_{DB}) in Abhängigkeit von einer Giergeschwindigkeit (r) des Kraftfahrzeugs (10), von einem von dem Fahrer auf das Lenkrad des Kraftfahrzeugs (10) angewandten Drehmoment und von einem Parameter (θ_{δ}), dessen Wert je nachdem variiert, ob der erste Steuerungssollwert (δ_{ref}) durch den Regler begrenzt wird oder nicht, berechnet wird.

2. Verfahren nach dem vorhergehenden Anspruch, wobei der erste Steuerungssollwert (δ_{ref}) und/oder der zweite Steuerungssollwert (M_{z_ref}) mittels eines Reglers bestimmt wird, der ein Amplitudenbegrenzer- und Sollwertänderungsmodell erfüllt.

3. Verfahren nach einem der vorhergehenden Ansprüche, wobei der Koeffizient (α_{DB}) so berechnet wird, dass:
- der zweite Steuerungssollwert (M_{z_ref}) null ist, wenn der absolute Wert eines von einem Fahrer auf ein Lenkrad des Kraftfahrzeugs (10) angewandten Drehmoments einen vorbestimmten Schwellenwert ( ${T}_{Driver_Mz}^{ctrl}$) überschreitet,
- nur der Aktor (31) zum Einschlagen der lenkbaren Räder (11) verwendet wird, wenn die Giergeschwindigkeit (r) des Fahrzeugs über einem Regelungsschwellenwert (r^{ctrl}) liegt und/oder wenn der erste Steuerungssollwert (δ_{ref}) es allein ermöglicht, das Kraftfahrzeug (10) zu stabilisieren, und
- der Aktor (31) zum Einschlagen der lenkbaren Räder (11) und der Aktor (32) zur Differentialbremsung der Räder (11, 12) andernfalls in Kombination verwendet werden.

4. Verfahren nach dem vorhergehenden Anspruch, wobei der Koeffizient (α_{DB}) so berechnet wird, dass er sich in Abhängigkeit von der Zeit kontinuierlich ändert.

5. Verfahren nach einem der vorhergehenden Ansprüche, wobei vorgesehen ist, die Bestimmung des ersten Steuerungssollwerts (δ_{ref}) zu unterbrechen, wenn der absolute Wert eines von einem Fahrer auf ein Lenkrad des Kraftfahrzeugs (10) angewandten Drehmoments einen vorbestimmten Schwellenwert ( ${T}_{Driver_δ}^{ctrl}$) überschreitet.

6. Verfahren nach einem der vorhergehenden Ansprüche, wobei vorgesehen ist, die Bestimmung des zweiten Steuerungssollwerts (M_{z_ref}) zu unterbrechen, wenn der absolute Wert eines von einem Fahrer auf ein Lenkrad des Kraftfahrzeugs (10) angewandten Drehmoments einen vorbestimmten Schwellenwert ( ${T}_{Driver_Mz}^{ctrl}$) überschreitet.

7. Verfahren nach einem der vorhergehenden Ansprüche, wobei der Regler, der es ermöglicht, den zweiten Steuerungssollwert (M_{z_ref}) zu bestimmen, ein Amplitudenbegrenzermodell erfüllt, so dass der zweite Steuerungssollwert (M_{z_ref}) kleiner oder gleich einem Grenzwert (M_{z_max}) bleibt, und wobei der Grenzwert (M_{z_max}) in Abhängigkeit von der Geschwindigkeit (V) und von der Giergeschwindigkeit (r) des Kraftfahrzeugs (10) bestimmt wird.

8. Verfahren nach einem der vorhergehenden Ansprüche, wobei zur Berechnung des ersten Steuerungssollwerts (δ_{ref}) vorgesehen ist, einen nicht gesättigten ersten Sollwert (δ_{K}) zu bestimmen und daraus den ersten Sollwert (δ_{ref}) mittels eines Pseudo-Reglers mit geschlossenem Regelkreis abzuleiten, der eine Übertragungsfunktion mit Vorwärtszweig aufweist, die eine hyperbolische Tangensfunktion der Differenz (Δ) zwischen dem nicht gesättigten ersten Sollwert (δ_{K}) und dem ersten Sollwert (δ_{ref}) umfasst.

9. Verfahren nach einem der vorhergehenden Ansprüche, wobei zur Berechnung des zweiten Sollwerts (M_{z_ref}) vorgesehen ist:
- einen nicht gesättigten zweiten Sollwert (M_{Kz}) zu bestimmen und daraus einen halbgesättigten zweiten Sollwert (M_{z-sat}) mittels eines Pseudo-Reglers mit geschlossenem Regelkreis abzuleiten, der eine Übertragungsfunktion mit Vorwärtszweig aufweist, die eine hyperbolische Tangensfunktion der Differenz (ε₁) zwischen dem nicht gesättigten zweiten Sollwert (M_{Kz}) und dem halbgesättigten zweiten Sollwert (M_{z-sat}) umfasst, dann
- einen weiteren Pseudo-Regler mit geschlossenem Regelkreis zu verwenden, der im Ausgang den zweiten Sollwert (M_{z_ref}) liefert und dessen Übertragungsfunktion mit Vorwärtszweig eine hyperbolische Tangensfunktion der Differenz (ε₂) zwischen dem halbgesättigten zweiten Sollwert (M_{z-sat}) und dem zweiten Sollwert (M_{z_ref}) umfasst.

10. Kraftfahrzeug (10), umfassend einen Aktor (31) zum Einschlagen der lenkbaren Räder (11), einen Aktor (32) zur Differenzialbremsung der Räder (11, 12) und einen Rechner (13) zum Steuern der Aktoren (31, 32), **dadurch gekennzeichnet, dass** der Rechner (13) dazu programmiert ist, ein Verfahren nach einem der Ansprüche 1 bis 9 zu implementieren.

## Claims

1. Process for automated piloting of a motor vehicle (10) having wheels (11, 12), at least two wheels (11) of which are steered wheels, having steps of:
- acquiring parameters (β, r, Ψ_{L}, e_{yL}, δ, δ_{ref}) relating to a trajectory for the motor vehicle (10) to avoid an obstacle (20), and of
- calculating by a computer (13) a first piloting setpoint (δ_{ref}) of a steering-angle actuator (31) of the steered wheels (11) and a second piloting setpoint (M_{z_ref}) of at least one differential-braking actuator (32) of the wheels (11, 12), as a function of said parameters (β, r, Ψ_{L}, e_{yL}, δ, δ_{ref}),
wherein the first piloting setpoint (δ_{ref}) and the second piloting setpoint (M_{z_ref}) are each determined by means of a controller that satisfies a setpoint amplitude and/or variation limiting model, the process being **characterized in that** the first piloting setpoint (δ_{ref}) and the second piloting setpoint (M_{z_ref}) are determined as a function of a coefficient (α_{DB}) that fixes the contribution of each actuator (31, 32), said coefficient (α_{DB}) being calculated as a function of a yaw velocity (r) of the motor vehicle (10), a torque applied by the driver to the steering wheel of the motor vehicle (10) and a parameter (θ_{δ}), the value of which varies according to whether or not the first piloting setpoint (δ_{ref}) is limited by the controller.

2. Process according to the preceding claim, wherein the first piloting setpoint (δ_{ref}) and/or the second piloting setpoint (M_{z_ref}) is determined by means of a controller that satisfies a setpoint amplitude and variation limiting model.

3. Process according to one of the preceding claims, wherein the coefficient (α_{DB}) is calculated so that:
- the second piloting setpoint (M_{z_ref}) is zero if the absolute value of a torque applied by a driver to a steering wheel of the motor vehicle (10) exceeds a predetermined threshold ( ${T}_{Driver_Mz}^{ctrl}$ ),
- only the steering-angle actuator (31) of the steered wheels (11) is used when the yaw velocity (r) of the vehicle is greater than a control threshold (r^{ctrl}) and/or when the first piloting setpoint (δ_{ref}) on its own makes it possible to stabilize the motor vehicle (10), and
- otherwise, the steering-angle actuator (31) of the steered wheels (11) and the differential-braking actuator (32) of the wheels (11, 12) are used in combination.

4. Process according to the preceding claim, wherein the coefficient (α_{DB}) is calculated so as to vary continuously as a function of time.

5. Process according to one of the preceding claims, wherein provision is made to interrupt the determination of the first piloting setpoint (δ_{ref}) when the absolute value of a torque applied by a driver to a steering wheel of the motor vehicle (10) exceeds a predetermined threshold ( ${T}_{Driver_δ}^{ctrl}$ ).

6. Process according to one of the preceding claims, wherein provision is made to interrupt the determination of the second piloting setpoint (M_{z_ref}) when the absolute value of a torque applied by a driver to a steering wheel of the motor vehicle (10) exceeds a predetermined threshold ( ${T}_{Driver_Mz}^{ctrl}$ ).

7. Process according to one of the preceding claims, wherein the controller making it possible to determine the second piloting setpoint (M_{z_ref}) satisfies an amplitude limiting model, so that the second piloting setpoint (M_{z_ref}) remains less than or equal to a limit (M_{z_max}), and wherein said limit (M_{z_max}) is determined as a function of the velocity (V) and the yaw velocity (r) of the motor vehicle (10).

8. Process according to one of the preceding claims, wherein, in order to calculate the first piloting setpoint (δ_{ref}), provision is made to determine a first non-saturated setpoint (δ_{K}) and to deduce the first setpoint (δ_{ref}) therefrom by means of a closed-loop pseudo-controller having a direct-chain transfer function that comprises a function of the hyperbolic tangent type of the deviation (Δ) between the first non-saturated setpoint (δ_{K}) and the first setpoint (δ_{ref}).

9. Process according to one of the preceding claims, wherein, in order to calculate the second setpoint (M_{z_ref}), provision is made:
- to determine a second non-saturated setpoint (M_{Kz}) and to deduce a second semi-saturated setpoint (M_{z-sat}) therefrom by means of a closed-loop pseudo-controller having a direct-chain transfer function that comprises a function of the hyperbolic tangent type of the deviation (ε₁) between the second non-saturated setpoint (M_{KZ}) and the second semi-saturated setpoint (M_{z-sat}), then
- to use another closed-loop pseudo-controller, which provides the second setpoint (M_{z_ref}) as output and the direct-chain transfer function of which comprises a function of the hyperbolic tangent type of the deviation (ε₂) between the second semi-saturated setpoint (M_{z-sat}) and said second setpoint (M_{z_ref}).

10. Motor vehicle (10) comprising a steering-angle actuator (31) of the steered wheels (11), a differential-braking actuator (32) of the wheels (11, 12), and a computer (13) for piloting said actuators (31, 32), **characterized in that** the computer (13) is programmed in order to carry out a process according to one of Claims 1 to 9.
